(19) Europäisches Patentamt
European Patent Office
Office européen des brevets

(11) EP 2 833 622 B1

(12) **FASCICULE DE BREVET EUROPEEN**

(45) Date de publication et mention
de la délivrance du brevet:
**04.11.2015 Bulletin 2015/45**

(51) Int Cl.:
***H04N 5/365*** (2011.01)

(21) Numéro de dépôt: **14176682.4**

(22) Date de dépôt: **11.07.2014**

(54) **Diagnostic de l'etat defectueux d'une matrice de detection bolométrique**

Diagnose des Störungszustands einer bolometrischen Erfassungsmatrix

Diagnosis of the faulty state of a bolometric detection matrix

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.07.2013 FR 1357516**

(43) Date de publication de la demande:
**04.02.2015 Bulletin 2015/06**

(73) Titulaire: **ULIS
38113 Veurey Voroize (FR)**

(72) Inventeurs:
• **Durand, Alain
38500 VOIRON (FR)**

• **Touvignon, Aurélie
38260 LA FRETTE (FR)**

(74) Mandataire: **Cabinet Laurent & Charras
Le Contemporain
50 Chemin de la Bruyère
69574 Dardilly Cedex (FR)**

(56) Documents cités:
**WO-A2-01/71299        US-A- 5 047 861
US-A1- 2003 160 171   US-A1- 2005 029 453
US-A1- 2005 157 942**

EP 2 833 622 B1

**Description**

**DOMAINE DE L'INVENTION**

La présente invention a trait au domaine de l'imagerie et de la pyrométrie bolométrique infrarouge. Plus particulièrement, l'invention concerne des détecteurs infrarouge bolométriques comprenant une matrice de bolomètres formés de membranes suspendues au-dessus d'un substrat.

**ETAT DE LA TECHNIQUE**

Dans le domaine des détecteurs infrarouges dits « thermiques », il est connu d'utiliser des matrices monodimensionnelles ou bidimensionnelles d'éléments sensibles au rayonnement infrarouge, susceptibles de fonctionner à température ambiante.

Un détecteur infrarouge thermique utilise traditionnellement la variation d'une grandeur physique d'un matériau approprié dit « thermométrique » ou « bolométrique », en fonction de sa température. Le plus couramment, cette grandeur physique est la résistivité électrique dudit matériau qui varie fortement avec la température. Les éléments sensibles unitaires du détecteur, ou « bolomètres », prennent usuellement la forme de membranes, comprenant chacune une couche en matériau thermométrique, et suspendues au-dessus d'un substrat, généralement réalisé en silicium, via des bras de soutien de résistance thermique élevée, la matrice de membranes suspendues étant usuellement désignée sous le terme de « rétine ».

Ces membranes mettent notamment en oeuvre une fonction d'absorption du rayonnement infrarouge incident, une fonction de conversion de la puissance du rayonnement absorbé en puissance calorifique, et une fonction thermométrique de conversion de la puissance calorifique produite en une variation de la résistivité du matériau thermométrique, ces fonctions pouvant être mises en oeuvre par un ou plusieurs éléments distincts.

Par ailleurs, les bras de soutien des membranes sont également conducteurs et connectés à la couche thermométrique de celles-ci, et il est usuellement ménagé dans le substrat au-dessus duquel sont suspendues les membranes, des moyens d'adressage et de polarisation séquentiels des éléments thermométriques des membranes, et des moyens de formation des signaux électriques utilisables en formats vidéo. Ce substrat et les moyens intégrés sont communément désignés par l'expression « circuit de lecture ».

Le circuit de lecture et la rétine sensible d'un détecteur sont habituellement intégrés dans un boîtier hermétique sous très faible pression, muni d'une fenêtre transparente aux rayonnements d'intérêt, usuellement entre 8 et 14 micromètres de longueur d'onde. Cette gamme correspond à la fenêtre de transparence de l'atmosphère et aux rayonnements majoritaires issus de scènes au voisinage de 300K.

Pour obtenir une image thermique ou pyrométrique par l'intermédiaire de ce détecteur, la scène est focalisée à travers une optique adaptée sur le plan focal où est disposée la rétine, et des stimuli électriques cadencés sont appliqués par l'intermédiaire du circuit de lecture à chacun des bolomètres, ou à chaque rangée de tels bolomètres, afin d'obtenir un signal électrique « vidéo » constituant l'image ou la mesure de la température atteinte par chacun desdits détecteurs élémentaires. Ce signal est éventuellement mis en forme de manière plus ou moins élaborée, directement par le circuit de lecture, puis transmis sous forme analogique ou digitale à une électronique extérieure au boîtier. Cette électronique applique typiquement diverses corrections à chaque trame vidéo délivrée par le détecteur, en particulier une correction de dispersions spatiales d'offset et de gain (dites « NUC » pour « Non Uniformity Corrections »), de manière à générer une image thermique ou pyrométrique proposée à l'affichage, ou plus généralement à l'exploitation des signaux ainsi formés à partir de la scène observée.

La température moyenne des membranes sensibles est imposée essentiellement par la température du substrat, qui en l'absence de stabilisation évolue par suite, en particulier, des changements des conditions extérieures, qui se reportent essentiellement par conduction thermique à travers les éléments du système intégré. Ces variations de température induisent une dérive du signal moyen en sortie des bolomètres. Les détecteurs bolométriques peuvent être équipés d'un module de stabilisation de température du substrat, habituellement un module Peltier (*TEC* pour l'expression anglo-saxonne *« Thermo Electric Cooler »*) pour éviter ces dérives de signal. Ce moyen de stabilisation se traduit cependant en une complexité et un coût du composant supplémentaires, et impliquent une consommation électrique d'autant plus élevée que la température ambiante est éloignée de la température de stabilisation choisie.

En variante, le détecteur est dépourvu de module de stabilisation de température et il est prévu, dans le circuit électronique de formation du signal en relation avec la température des bolomètres, un élément de compensation de température du plan focal (TPF) lui-même bolométrique, c'est-à-dire dont le comportement électrique suit la température du substrat, mais reste essentiellement insensible au rayonnement. Ce résultat est obtenu par exemple au moyen de structures bolométriques dotées par construction d'une faible résistance thermique vers le substrat, et/ou en masquant ces structures derrière un écran opaque au rayonnement thermique - objet de la détection. La mise en oeuvre de ces éléments de compensation offre par ailleurs l'avantage d'éliminer l'essentiel du courant dit de mode commun issu des bolomètres d'imagerie ou « actifs ».

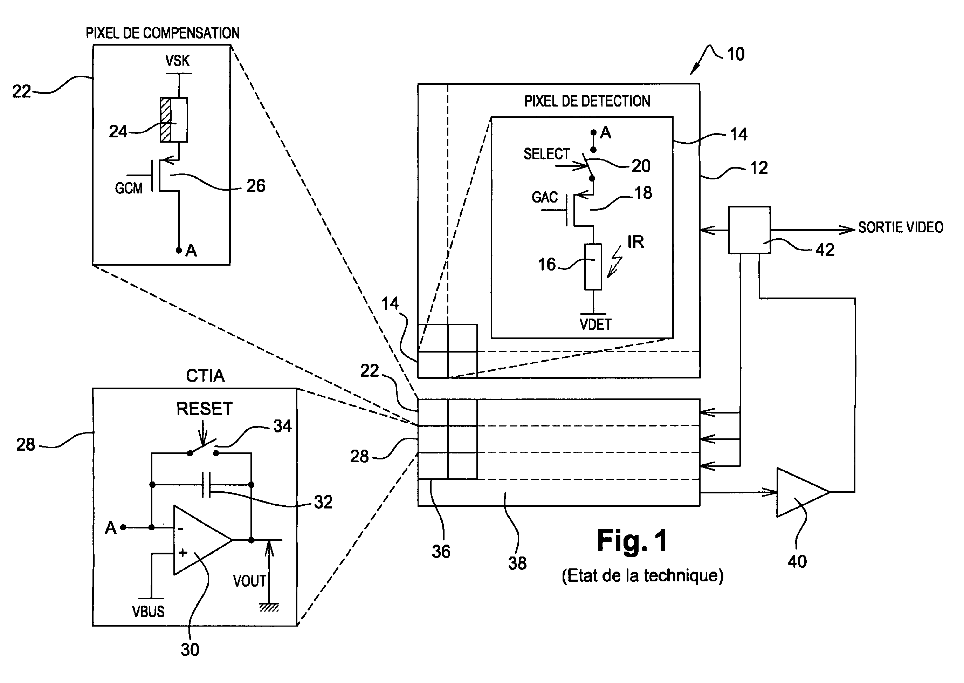

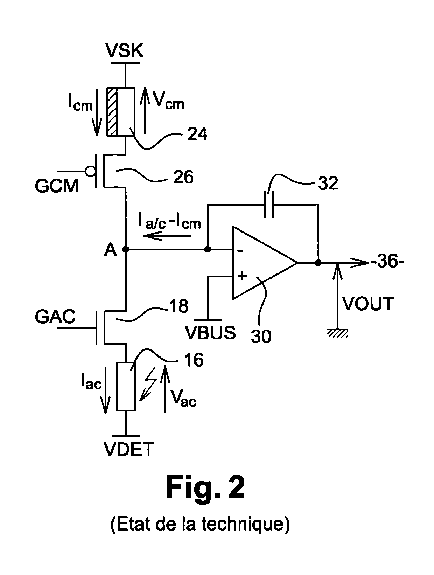

La figure 1 est un schéma électrique d'un détecteur bolométrique **10** sans régulation de température, ou détecteur « *TECless* », de l'état de la technique, comprenant une structure de compensation du mode commun, et la figure 2 est un schéma électrique d'un circuit mis en oeuvre pour former un signal de lecture d'un bolomètre du détecteur compensé du mode commun. Un tel détecteur est par exemple décrit dans le document : « Uncooled amorphous silicon enhancement for $25\mu$m pixel pitch achievement »; E. Mottin et al, Infrared Technology and Application XXVIII, SPIE, vol. 4820E.

Le détecteur **10** comprend une matrice bidimensionnelle **12** d'éléments unitaires de détection bolométrique **14**, ou « pixels », comprenant chacun un bolomètre résistif sensible **16** sous la forme d'une membrane suspendue au-dessus d'un substrat, tel que décrit précédemment, et de résistance électrique $R_{ac}$. Le bolomètre **16**, également désigné sous l'expression « actif » ou « de détection », est connecté à l'une de ses bornes à une tension constante *VDET,* notamment la masse du détecteur **10**, et à l'autre de ses bornes à un transistor MOSFET de polarisation **18** fonctionnant en régime saturé, par exemple un transistor NMOS, réglant la tension $V_{ac}$ aux bornes du bolomètre **16** au moyen d'une tension de commande de grille *GAC.* Le pixel **14** comprend également un interrupteur de sélection **20,** connecté entre le transistor MOS **18** et un noeud *A* prévu pour chaque colonne de la matrice **12,** et piloté par un signal de commande *SELECT,* permettant la sélection du bolomètre **16** pour sa lecture. Le transistor **18** et l'interrupteur **20** sont usuellement formés dans le substrat sous l'emprise de la membrane du bolomètre **16**. Les éléments **16** et **18** forment une branche dite « de détection ».

Le détecteur **10** comporte également, en pied de chaque colonne de la matrice **12,** une structure de compensation **22,** également usuellement désignée sous le terme de structure « d'ébasage » ou de *« skimming »*. La structure **22** comporte un bolomètre de compensation **24,** de résistance électrique $R_{cm}$, rendu insensible au rayonnement incident issu de la scène à observer.

Le bolomètre **24** est construit au moyen du même matériau thermométrique que le bolomètre **16,** mais selon une conformation structurale dotée d'une très faible résistance thermique vers le substrat. Ce résultat est facilement réalisable, par exemple au moyen d'une construction directe des éléments résistifs du bolomètre au contact du substrat, ou par la simple absence de bras d'une structure résistive bolométrique malgré tout suspendue, ou encore en préservant une matière thermiquement conductrice de la chaleur entre le substrat et le corps du bolomètre de compensation. La résistance électrique du bolomètre **24** est ainsi essentiellement dictée par la température du substrat, le bolomètre **24** est alors dit « thermalisé » au substrat.

Le bolomètre **24** est connecté à l'une de ses bornes à une tension constante *VSK,* et la structure de compensation **22** comporte en outre un transistor MOSFET de polarisation **26** fonctionnant en régime saturé, de polarité opposée à celle des transistors **18** des pixels de détection **14,** par exemple un transistor PMOS, réglant la tension $V_{cm}$ aux bornes du bolomètre **24** au moyen d'une tension de commande de grille *GCM* et connecté entre l'autre borne du bolomètre de compensation **24** et le noeud *A*. Les éléments **24** et **26** forment une branche dite « de compensation commune » à chaque colonne. Il n'est pas nécessaire d'ajuster par conception la résistance $R_{cm}$ du bolomètre **24** à une valeur proche de celle du bolomètre **16,** mais il est par contre nécessaire d'ajuster le courant qui le traverse à une valeur proche de celle qui parcourt la branche de détection pendant la lecture. Ce résultat est par exemple et typiquement obtenu au moyen d'une résistance plus faible que celle du bolomètre **16,** et d'une tension de polarisation $V_{cm}$ plus faible grossièrement dans la même proportion.

Le détecteur **10** comporte également, en pied de chaque colonne de la matrice **12,** un intégrateur **28** de type CTIA (pour l'expression anglo-saxonne *« Capacitive Trans-Impedance Amplifier »*) comportant par exemple un amplificateur opérationnel **30** et un condensateur **32** connecté entre l'entrée inverseuse et la sortie de l'amplificateur **30**. La borne inverseuse et la borne non-inverseuse de ce dernier sont par ailleurs connectées respectivement au noeud *A* et à une tension constante *VBUS.* La tension *VBUS* constitue ainsi une référence pour les signaux de sortie, et est comprise entre *VDET* et *VSK.* Un interrupteur **34,** piloté par un signal *Reset,* est également prévu en parallèle du condensateur **32,** pour la décharge de celui-ci. Les sorties des CTIA **28** sont enfin par exemple connectées à des échantillonneurs-bloqueurs **36** respectifs pour la délivrance des tensions *Vout* des CTIA en mode multiplexé au moyen d'un multiplexeur **38** vers un ou des amplificateur(s) série de sortie **40**. Il peut être également intégré en sortie des moyens de numérisation (conversion analogique - digital : *ADC* en anglais). Le détecteur **10** comprend enfin une unité de synchronisation et de traitement vidéo **42** commandant notamment les différents interrupteurs décrits précédemment. En fonctionnement, la matrice **12** est lue ligne par ligne, l'ensemble des lignes lues formant ainsi un trame d'image, ou « trame ». Pour lire une ligne de la matrice **12,** les interrupteurs **20** de la ligne de pixels **14** sont fermés et les interrupteurs **20** des autres lignes sont ouverts.

Après une phase de décharge des condensateurs des CTIA en pied de colonne, réalisée par la fermeture des interrupteurs **34** suivie de leur ouverture, il est ainsi obtenu un circuit tel que représenté sur la figure 2 pour chaque pixel de la ligne en cours de lecture. Un courant $I_{ac}$ circule dans le bolomètre de détection **16** du pixel sous l'effet de sa polarisation en tension par le transistor MOSFET **18,** et un courant $I_{cm}$ circule dans le bolomètre de compensation **24** de la structure de compensation sous l'effet de sa polarisation en tension par le transistor MOSFET **26.** Ces courants sont soustraits l'un de l'autre au niveau du noeud $\underline{A}$, et la différence de courants résultante est intégrée par le CTIA **28** pendant une durée d'intégration prédéterminée *Tint.* La tension de sortie *Vout* du CTIA **28** représente ainsi une mesure de la variation de la résistance du bolomètre de détection **16** provoquée par le rayonnement incident à détecter, puisque la partie non utile du courant $I_{ac}$ est compensée, au moins en partie, par le courant $I_{cm}$ spécifiquement produit pour reproduire cette partie non utile.

Par ailleurs, comme précédemment décrit, les bolomètres de détection **16** n'étant pas strictement identiques, les tensions *Vout* présentent une dispersion de leurs valeurs devant une scène uniforme, ou « dispersion d'offsets ». De même, on observe également une dispersion de responsivité du détecteur, ou « dispersions de gains », c'est-à-dire une dispersion des variations des tensions *Vout* devant une variation uniforme d'une scène uniforme. Ces dispersions étant dommageables pour la qualité des images produites par le détecteur, les tensions *Vout* sont usuellement corrigées par l'unité **42** d'au moins la dispersion d'offsets. La seule correction de la dispersion d'offsets est usuellement désignée sous l'expression de correction « 1 point », alors que la correction combinant à la fois la dispersion d'offsets et de la dispersion de gains est usuellement désignée sous l'expression de correction « 2 points ».

Dans ce qui suit, l'expression « signal brut » désigne un signal non corrigé, et désigne notamment les signaux en amont de l'unité **42**. Cette expression désigne notamment indifféremment des signaux analogiques, par exemple les tensions *Vout* en sortie des CTIA, ou des signaux numériques, par exemple des valeurs numériques des tensions *Vout* si la correction « 1 point » ou « 2 points » est mise en oeuvre numériquement, la forme analogique ou numérique des signaux bruts se comprenant aisément du contexte dans lequel l'expression est employée. L'expression « image brute », ou «trame brute », désigne ainsi l'ensemble des signaux bruts issus d'une lecture de la matrice **12.**

De manière analogue, l'expression « signal corrigé » désigne un signal ayant subi une correction visant à éliminer ou compenser la dispersion des signaux, par exemple une correction « 1 point » ou « 2 points », et l'expression « image corrigée », ou « trame corrigée », désigne ainsi une image ou trame corrigée à partir des valeurs brutes par la correction « 1 point » ou « 2 points ».

Un pixel défectueux est un élément unitaire de détection dont le signal correspondant, par exemple la tension *Vout* dans l'exemple de détecteur décrit ci-dessus, est considérée comme non exploitable pour former un élément d'image représentatif de la scène observée. Par exemple, un pixel défectueux produit un signal qui est saturé d'un côté ou de l'autre de la dynamique de sortie de la chaine de formation du signal, et ce, quelle que soit la scène observée.

Plus généralement, un pixel défectueux est un pixel qui génère, le cas échéant, après l'application d'une correction « 1 point » ou « 2 points », un signal ayant un écart anormal par rapport à ses voisins, non attribuable à la scène observée et visible sur une image ou sur une séquence vidéo dans des conditions environnementales données. Cet écart peut provenir de diverses causes physiques qui induisent une déviation prononcée du comportement électrique ou/et optique intrinsèque du pixel défectueux par rapport à ses pixels voisins jugés « normaux ». Par comportement « normal » d'un pixel, on entend un comportement du pixel proche de l'ensemble des pixels de la rétine ou de l'ensemble des chaines de formation de signal, pour qu'une correction « 1 point » ou « 2 points » ne fasse apparaître aucun écart du signal corrigé issu du pixel dans des conditions opératoires standard.

Le tableau ci-dessous dresse une liste des défauts récurrents connus associés aux rétines bolométriques ainsi que leurs causes physiques. La notation *NC* (pour n̲iveau c̲ontinu) se réfère ici à la valeur du signal brut issu d'un pixel lorsque la rétine est exposée à une scène sensiblement uniforme en température.

| Cause physique du défaut | Effet/Défaut observé sur le NC pixel |
|---|---|
| Pixel en court-circuit | *NC* en limite de dynamique |
| Pixel en circuit ouvert | *NC* en limite de dynamique |
| Ecart anormal de la responsivité de la chaine de formation du signal du pixel | Ecart anormal de *NC* pour un fort flux incident |
| Ecart anormal de la résistance du bolo mètre | Ecart anormal de *NC* quel que soit le flux incident |
| Ecart anormal de bruit | *NC* fluctuant pour un flux constant |
| Pixel succédant (en lecture) à un pixel en court-circuit ou en circuit ouvert. Il s'agit d'un pixel situé sur la même ligne ou sur la même colonne à quelques indices (i,j) près et dont la chaine de traitement du signal est affectée temporellement par un état anormal du signal précédent. | *NC* fluctuant quel que soit le flux incident, et écart de *NC* anormal quel que soit le flux incident |
| Défaut électronique sur la chaine de formation du signal du pixel (par exemple, défaut du transistor de polarisation ou du CTIA) | *NC* fluctuant quel que soit le flux incident, et écart de *NC* non lié au flux ni au bolomètre |

Pour connaître l'existence d'éventuels pixels défectueux, des tests d'opérabilité sont usuellement réalisés en usine, c'est-à-dire avant mise en service du détecteur, en réalisant diverses mesures et analyses visant à établir la conformité des mesures de chacun des pixels par rapport à une fenêtre de conformité fonctionnelle prédéterminée. Les mesures en question consistent généralement en une extraction, au niveau de chacun des pixels, notamment des paramètres fonctionnels suivants :

- le niveau continu *NC* ;
- la responsivité *Resp,* c'est-à-dire la variation du signal issu du pixel devant une variation uniforme d'une scène uniforme à laquelle est exposée la rétine ; et
- le bruit temporel du signal issu du pixel.

Les tests d'opérabilité permettent ainsi d'établir une liste des pixels défectueux, ou « table d'opérabilité », c'est-à-dire une série de coordonnées de ligne et de colonne définissant la localisation desdits pixels dans la matrice de pixels. La table d'opérabilité est ensuite mémorisée dans l'unité **42** et exploitée par celle-ci lors de l'utilisation du détecteur pour corriger les points des images correspondant aux pixels défectueux, par exemple le remplacement du signal de ces pixels par une moyenne des signaux fournis par les pixels voisins.

Toutefois, une table d'opérabilité n'est l'image des défauts du détecteur qu'à un instant particulier et pour des conditions environnementales particulières, notamment de température et d'illumination, et pour des conditions de fonctionnement particulières, notamment de polarisation. Tout d'abord, un pixel peut être défectueux pour les conditions environnementales et de fonctionnement particulières mises en oeuvre pour le test d'opérabilité et être néanmoins jugé comme non défectueux pour d'autres conditions environnementales et de fonctionnement. Ainsi, une modification des conditions environnementales et de fonctionnement est susceptible d'induire sur certains pixels réputés initialement conformes, des modifications de leur signal de sortie considérées comme non-conformes dans ces nouvelles conditions environnementales et de fonctionnement, rendant de ce fait la table d'opérabilité non pertinente pour ces pixels. Pour pallier un tel problème, il conviendrait donc de déterminer des tables d'opérabilité pour de multiples conditions environnementales et de fonctionnement. Outre le coût et la durée nécessaire pour obtenir une multiplicité de tables, il n'est pas possible de reproduire lors des tests d'opérabilité initiaux en usine toutes les conditions que peut rencontrer un détecteur au cours de son utilisation, de sorte que se poserait malgré tout la question de la validité des tables embarquées vis-à-vis des conditions rencontrées par le détecteur.

De plus, pour des conditions environnementales et de fonctionnement particuliers, le comportement de certains pixels peut de manière imprévisible dériver sensiblement, certains pixels pouvant même perdre totalement leur fonctionnalité. La table d'opérabilité peut ainsi s'avérer non pertinente une fois le détecteur en service. Il conviendrait donc de mettre à jour régulièrement la table d'opérabilité pour tenir compte de ce phénomène. Or, les mesures décrites ci-dessus nécessitent usuellement l'utilisation de dispositifs optiques complexes et couteux, notamment l'utilisation de « corps noirs » de référence pour différentes températures. De même, la résistance des bolomètres n'est pas directement mesurable à partir des signaux en sortie des chaines de formation de signal du fait qu'il est très généralement prévu un dispositif de compensation pour rejeter le mode commun dans la formation de ces signaux de manière à ne mesurer que les petites variations de signal liées aux variations de résistance induites par le flux incident de la scène observée.

La détermination des résistances des bolomètres nécessite donc un équipement et une procédure spécifiques. Comme seul le constructeur dispose généralement de ce type d'équipement, la mise à jour de la table d'opérabilité nécessite par conséquent un retour en usine du détecteur pour la mise en oeuvre d'un nouveau test d'opérabilité

D'autres exemples au problème de pixels défectueux sont donnés par les documents US5047861 et US20050157942. Des exemples de calibration d'offsets sont donnés dans WO0171299, US20050029453 et US20030160171.

## EXPOSE DE L'INVENTION

Le but de la présente invention est de proposer un procédé de diagnostic de l'état défectueux d'un détecteur comprenant une rétine bolométrique, à partir des seuls signaux en aval du circuit de lecture du détecteur, ne nécessitant donc pas l'emploi d'un équipement particulier, et permettant ainsi la mise en oeuvre du diagnostic y compris lorsque le détecteur est en service.

A cet effet, l'invention a pour objet un procédé de diagnostic de l'état défectueux de chaines de formation de signal d'un détecteur bolométrique, ci-après « chaîne », comportant une matrice de bolomètres de détection suspendus au-dessus d'un substrat, chaque chaine comportant un bolomètre de ladite matrice, un circuit de stimulation électrique de ladite chaine, et un circuit de formation d'un signal en fonction de la stimulation appliquée à ladite chaîne par le circuit de stimulation, ledit procédé consistant:

a. à former l'image d'une scène sensiblement uniforme sur la matrice de bolomètres ;

b. à appliquer au moins une première stimulation et une seconde stimulation différentes aux chaînes ;

c. à lire les signaux formés par les chaînes correspondant respectivement aux stimulations appliquées ; et

d. pour chaque chaîne d'un ensemble prédéterminé de chaines à diagnostiquer :

    ◦ à définir un voisinage constitué de chaînes dont les bolomètres de détection sont voisins dans la matrice de bolomètres de détection de ladite chaîne ;

    ◦ à calculer des coefficients d'un polynôme interpolant les valeurs des signaux formés par ladite chaîne en fonction des au moins première et seconde stimulations appliquées ;

    ◦ à calculer, pour chaque chaîne du voisinage de ladite chaîne, des coefficients d'un polynôme interpolant les valeurs des signaux formés par la chaîne du voisinage en fonction des au moins première et seconde stimulations appliquées;

    ◦ à calculer une moyenne et un écart type desdits coefficients calculés des chaînes du voisinage ou de l'ensemble formé des chaînes du voisinage et de ladite chaîne ; et

    ◦ à diagnostiquer que ladite chaine est défectueuse si la valeur desdits coefficients de celle-ci est à l'extérieur de marges définies en fonction de la moyenne et de l'écart type calculés.

Le diagnostic est donc effectué en jugeant de la conformité ou de la non-conformité d'un signal quelconque issu d'un bolomètre de la matrice en relation avec son appartenance à un intervalle établi à partir de signaux issus de bolomètres voisins. Par « chaîne de formation de signal » ou « chaine », on entend les circuits et les composants concourant à l'établissement d'un signal issu d'un bolomètre de détection.

Notamment, la chaîne de formation de signal désigne les circuits et les composants concourant à l'établissement d'un signal brut. Dans l'exemple du détecteur décrit précédemment en relation avec les figures 1 et 2, la chaîne de formation de signal associé à un bolomètre **16** comprend donc le circuit de la figure 2 mais pas les circuits de correction du signal brut.

En variante, la chaîne de formation de signal désigne les circuits et les composants concourant à l'établissement d'un signal corrigé s'il est souhaité connaître la conformité de ce signal. Dans l'exemple du détecteur décrit précédemment en relation avec les figures 1 et 2, la chaîne de formation de signal associé à un bolomètre **16** comprend alors le circuit de la figure 2, et comprend donc notamment le pixel **14** auquel appartient le bolomètre **16,** ainsi que les circuits de correction du signal brut *Vout* issu du bolomètre **16**.

Dans le cadre du diagnostic de conformité selon l'invention, le terme « stimulation » s'entend au sens large et désigne l'ensemble des paramètres commandant l'établissement des signaux issus de chaque bolomètre. Notamment, ce terme désigne la polarisation électrique classique appliquée lors de la lecture de la matrice de bolomètres, par exemple une tension ou un courant de polarisation, mais également d'autres paramètres qui concourent à l'établissement du signal tels que la durée d'intégration et la fréquence trame par exemple. Par ailleurs, on parlera de « stimulation des chaines » pour la polarisation à la fois des bolomètres de détection et des bolomètres de compensation, et de « lecture de la matrice de bolomètres » pour l'établissement des signaux objets des tests correspondant à la « stimulation » des chaînes.

Ainsi, en faisant varier les conditions d'établissement du signal délivré par une chaine et en analysant les variations induites du signal à l'aide d'une interpolation polynomiale, l'état défectueux de la chaine peut être diagnostiqué avec un faible taux d'erreur. Notamment, le procédé selon l'invention permet de diagnostiquer des défauts induits par un écart non conforme d'une résistance d'un bolomètre de détection ou de la responsivité associée à un bolomètre de détection. En outre, ce procédé met en oeuvre des éléments internes programmables usuellement embarqués dans le détecteur, de sorte qu'il n'est pas nécessairement besoin de modifier de façon matérielle les circuits et unités de traitement usuellement prévus dans les détecteurs de l'état de la technique. Notamment, seule une modification logicielle desdits circuits et unités peut être envisagée.

Selon un mode de réalisation de l'invention, la stimulation des chaînes est réalisée ligne par ligne de la matrice de bolomètres selon une fréquence trame, et les au moins première et seconde stimulations diffèrent uniquement par la fréquence trame appliquée.

La fréquence trame correspond au nombre d'images délivrées en sortie du détecteur par seconde. En d'autres termes, la fréquence trame règle le taux de récurrence de l'injection de courant dans les bolomètres et permet donc de faire varier leur résistance électrique au moyen d'un auto-échauffement de ceux-ci par effet Joule, sans qu'il soit nécessaire de modifier les caractéristiques de la tension ou du courant de polarisation des bolomètres ou la durée d'application de cette tension ou de ce courant. Il n'est donc pas nécessaire de modifier les chaines de formation du signal, par exemple en prévoyant des sources de tension ou de courant variables ou en dimensionnant la capacité des intégrateurs pour tenir compte de la variabilité de la tension ou du courant de polarisation, ou de la durée d'intégration.

Selon un mode de réalisation de l'invention, la stimulation des chaînes comporte l'application d'une tension de polarisation aux bolomètres, et les au moins une première et seconde stimulations diffèrent uniquement par la tension de polarisation appliquée aux bolomètres.

Selon un mode de réalisation de l'invention, la stimulation des chaînes comporte l'application d'un courant de polarisation aux bolomètres, et les au moins une première et seconde stimulations diffèrent uniquement par le courant de polarisation appliqué.

Selon un mode de réalisation de l'invention, la stimulation des chaînes comporte l'application d'une tension et/ou d'un courant de polarisation aux bolomètres pendant une durée de polarisation, et les au moins une première et seconde stimulations diffèrent uniquement par la durée de polarisation appliquée.

Selon un mode de réalisation de l'invention, les étapes a), b), c) et d) sont exécutées plusieurs fois, chaque chaîne diagnostiquée comme défectueuse est répertoriée dans un ensemble de chaînes défectueuses, et le voisinage d'une chaîne à diagnostiquer comporte les chaînes de formation de signal :

- dont les bolomètres appartiennent à une fenêtre de bolomètres centrée sur le bolomètre de la chaine à diagnostiquer ; et
- qui n'appartiennent pas à l'ensemble de chaînes défectueuses.

Ceci permet de ne pas inclure dans le calcul des différents paramètres, des pixels défectueux susceptibles de fausser l'analyse en raison de la non-conformité de leurs signaux.

Selon un mode de réalisation de l'invention, la moyenne et l'écart type servant à évaluer la conformité d'une chaîne sont calculés à partir des coefficients polynomiaux extraits de la chaîne à diagnostiquer et les coefficients polynomiaux extraits des chaînes du voisinage de celle-ci. Si la chaîne est diagnostiquée comme défectueuse, une confirmation ou une infirmation du diagnostic est réalisée :

- en calculant une moyenne et un écart type des coefficients des polynômes d'interpolation uniquement des chaînes du voisinage de ladite chaine ; et
- en confirmant le diagnostic si la valeur des coefficients du polynôme d'interpolation de ladite chaine est à l'extérieur de marges définies en fonction de la moyenne et de l'écart type calculés en fonction uniquement du voisinage, et en infirmant le diagnostic sinon.

En d'autres termes, le diagnostic est confirmé ou infirmé en ôtant du calcul des moyennes les paramètres du bolomètre jugé initialement défectueux, ce qui permet d'améliorer la robustesse du diagnostic.

## BREVE DESCRIPTION DES FIGURES

L'invention sera mieux comprise à la lecture de la description qui va suivre, donnée uniquement à titre d'exemple, et réalisée en relation avec les dessins annexés, dans lesquels des références identiques désignent des éléments identiques ou analogues, et dans lesquels :

- la figure 1 est un schéma électrique d'un détecteur bolométrique infrarouge de l'état de la technique, déjà décrit ci-dessus ;
- la figure 2 est un schéma électrique illustrant la lecture d'un bolomètre de détection du détecteur de la figure 1 à l'aide d'une structure de compensation ;
- la figure 3 est un schéma électrique d'un détecteur bolométrique infrarouge conforme à l'invention ;
- la figure 4 est un organigramme d'un procédé selon l'invention mis en oeuvre par le détecteur de la figure 3 ; et
- la figure 5 est un organigramme détaillant un algorithme de détection des défauts mise en oeuvre par le procédé de la figure 3.

## DESCRIPTION DETAILLEE DE L'INVENTION

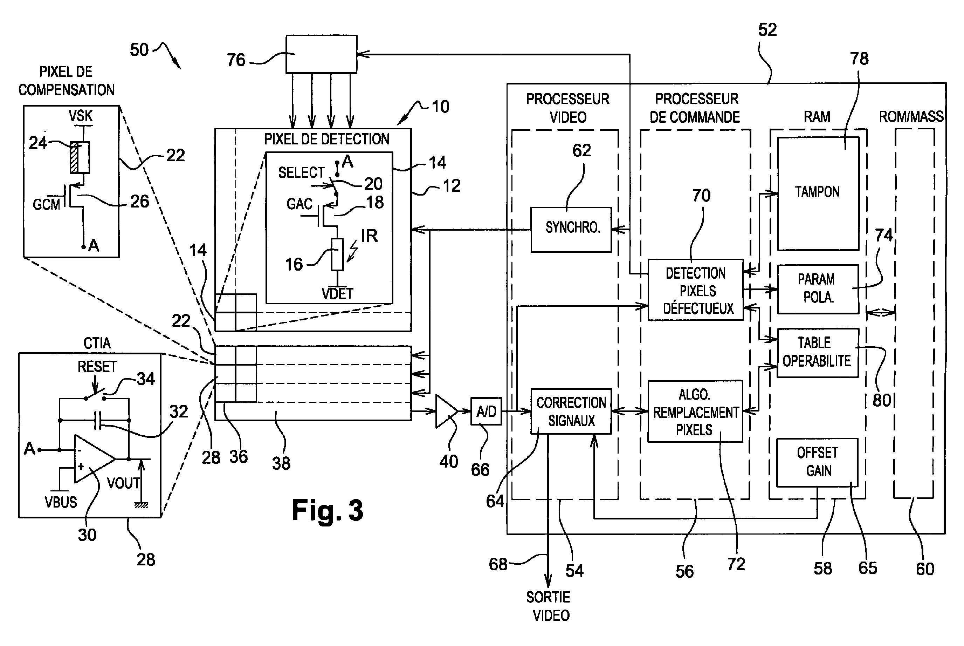

Il va à présent être décrit en relation avec la figure 3 un détecteur **50** selon l'invention mettant en oeuvre un diagnostic des chaînes de formation des signaux bruts. Le détecteur **50** comporte une matrice de pixels **10**, des structures de compensation **22**, des intégrateurs **28**, des échantillonneurs bloqueurs **36**, un multiplexeur **38** et un amplificateur **40,** tels que décrits précédemment en relation avec les figures 1 et 2.

Dans ce qui suit, les signaux, les chaînes de formation de signal, et la table d'opérabilité sont référencés par rapport à la position des bolomètres de détection **16** dans la matrice de bolomètres **12**. Notamment, une image brute utilisée pour le test d'opérabilité selon l'invention est une matrice *« NC »* de dimensions égales à celles de la matrice de bolomètres **12**, la composante $NC(i,j)$ de coordonnées *(i,j)* de l'image étant un signal associé au bolomètre de détection de coordonnées *(i,j)* dans la matrice de bolomètres **12**. De même, la table d'opérabilité *Top* se présente sous la forme d'une matrice de dimensions égales à celles de la matrice **12**, la composante $Top(i,j)$ de coordonnées *(i,j)* de la table *Top* décrivant l'état conforme ou défectueux de la chaine de formation associée au bolomètre de détection de coordonnées *(i,j)* dans la matrice de bolomètres **12.** De manière analogue, les chaines de formation du signal sont référencées sous le terme *C(i,j).* On parlera ainsi de chaînes «voisines» lorsque leurs bolomètres de détection respectifs sont voisins dans la matrice **12.**

Le détecteur **50** comporte également une unité de commande et de traitement d'information **52,** par exemple un ou plusieurs microprocesseurs associés à des mémoires RAM, ROM et de stockage de masse, d'une manière connue en soi. L'unité **52** comporte notamment un processeur vidéo **54,** un processeur de commande **56,** une mémoire RAM **58** et une mémoire ROM et/ou de stockage de masse **60.**

Le processeur vidéo **54** met en oeuvre un bloc de synchronisation **62** commandant les différents interrupteurs et circuits de polarisation du détecteur pour la lecture, par exemple ligne à ligne, de la matrice de bolomètres **12,** tel que décrit précédemment. Le processeur vidéo **54** met également en oeuvre un bloc de correction **64** recevant les signaux générés par la lecture de la matrice **12,** par exemple des signaux produits par un convertisseur analogique/numérique **66** connecté à l'amplificateur de sortie **40.** Le bloc **64** applique une correction de type « 1 point » ou « 2 points » aux signaux reçus en fonction de tables d'offsets et de gains chargées dans une zone **65** de la mémoire RAM **58** depuis la mémoire **60** lors de la mise sous tension du détecteur, et régulièrement mises à jour comme cela est connu en soi. Les images corrigées ainsi obtenues subissent une correction supplémentaire tenant compte de l'état défectueux de certaines chaînes, comme cela est décrit ci-dessous, et sont ensuite délivrées sur une sortie vidéo **68.**

Le processeur de commande **56** comporte quant à lui un bloc **70** mettant en oeuvre une détection de chaines de formation de signal défectueuses du détecteur **50,** ou « test d'opérabilité », ainsi qu'un bloc **72** calculant des signaux de remplacement des signaux issus des chaînes détectées comme étant défectueuses par le bloc **70.**

Le bloc de détection **70** est connecté à un ou plusieurs éléments et circuits intervenant dans l'établissement des signaux électriques appliqués aux bolomètres de détection **16** et de compensation **24** pour générer les tensions de sortie *Vout* selon plusieurs stimulations prédéterminées, chaque stimulation étant définie par un jeu de paramètres chargés dans une zone **74** de la RAM depuis la mémoire **60** lors de la mise sous tension du détecteur. Notamment, le bloc de détection **70** est connecté au bloc de synchronisation **62** pour délivrer à ce dernier des consignes de commande des interrupteurs et des circuits de polarisation du détecteur **10** de manière à commander la durée d'intégration *Tint* par les CTIA **28** et/ou la fréquence de trame *ftrame* lors de la lecture de la matrice **12.**

En variante, ou de manière supplémentaire, le bloc **70** est connecté à un circuit de commande **76** des tensions de polarisation des bolomètres de détection **16** et de compensation **24** afin de délivrer au circuit **76** des consignes de tension de polarisation, notamment des consignes de tensions *GAC* et *GCM* des transistors de polarisation **18** et **26.** Une source de tension pilotable peut également être prévue dans le détecteur pour produire les tensions d'alimentation *VDET* et *VSK* pilotables, cette source de tension étant pilotée par le bloc **70** pour faire varier les tensions de polarisation aux bornes des bolomètres de détection **16** et de compensation **24.**

Le bloc **70** est également connecté à la sortie du convertisseur analogique/numérique **66** et reçoit ainsi les niveaux bruts numériques et mémorise ceux-ci dans une zone tampon **78** de la mémoire RAM **58.**

Enfin, le bloc **70** met en oeuvre un algorithme de détection des chaînes de formation de signal défectueuses en fonction des différentes stimulations appliquées en vue du test d'opérabilité, comme cela sera décrit plus en détail par la suite. Notamment, le bloc **70** identifie les chaînes défectueuses et répertorie celles-ci dans une table d'opérabilité *Top* mémorisée dans une zone **80** de la mémoire RAM et dans la mémoire **60.**

Le bloc **72** de calcul des signaux de remplacement est, quant à lui, connecté à la mémoire RAM **58** afin d'accéder à la table d'opérabilité *Top* **80** et au bloc **64** pour recevoir de celui-ci les images corrigées. Pour chaque image corrigée calculée délivrée par le bloc **64,** le bloc **72** remplace la composante *(i,j)* de l'image corrigée associée issue d'une chaîne *C(i,j)* référencée comme défectueuse dans la table *Top* par une autre valeur, par exemple la moyenne des composantes corrigées de l'image issues de chaînes voisines.

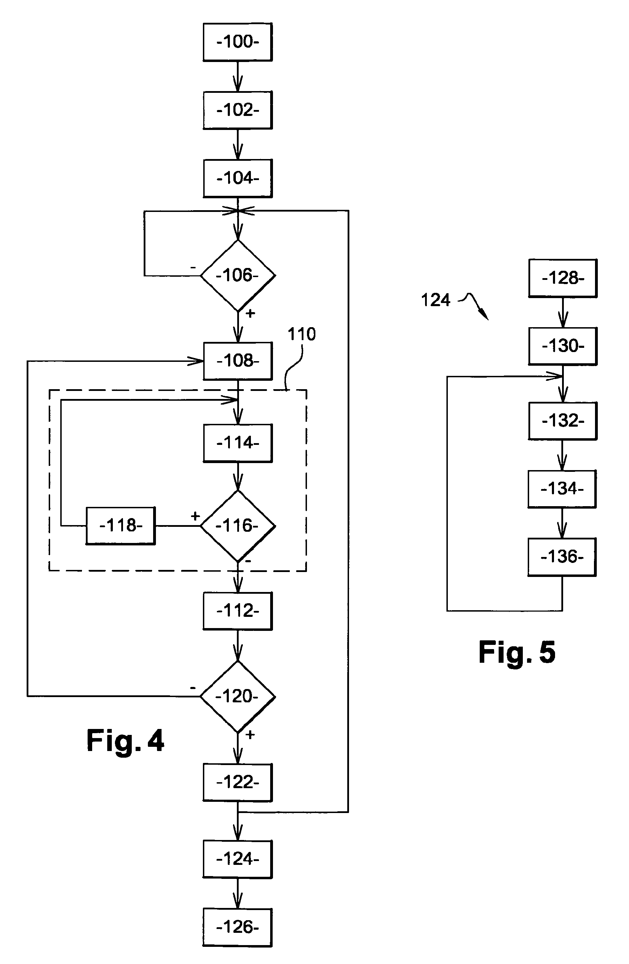

Il va à présent être décrit, en relation avec les organigrammes des figures 4 et 5, un procédé de détection des chaînes de formation de signal défectueuses mis en oeuvre par le détecteur venant d'être décrit.

En se référant à la figure 4, le procédé débute, en **100,** par un premier test d'opérabilité réalisé en usine, par exemple un test d'opérabilité tel que pratiqué dans l'état de la technique, afin de déterminer une table d'opérabilité $T_{op}$ initiale répertoriant les chaines de formation de signal défectueuses. La table d'opérabilité initiale $T_{op}$ est ensuite mémorisée dans la mémoire **60** du détecteur et utilisée pour corriger les signaux issus des chaines jugées défectueuses répertoriées dans celle-ci. L'étape **100** est cependant optionnelle, une table d'opérabilité pouvant être établie pour la première fois lorsque le détecteur est en service à l'aide des étapes décrites ci-après.

Dans une étape **102,** plusieurs stimulations sont mémorisées dans la mémoire **60** du détecteur. Notamment, au moins un ensemble d'au moins deux stimulations variant l'une de l'autre par une valeur minimale définie d'un seul et unique paramètre sont mémorisés dans la mémoire **60,** par exemple cette stimulation peut faire référence à la tension de polarisation, la durée d'intégration ou la fréquence trame de lecture de la matrice **12.** Plusieurs ensembles de stimulation peuvent être mémorisés, chacun caractérisé par la variation d'un seul paramètre de stimulation, chaque ensemble comprenant au moins deux stimulations, et avantageusement trois stimulations, comme cela sera expliqué plus en détail par la suite.

De préférence, le paramètre variable d'un même ensemble de stimulation est choisi suffisamment différent d'une stimulation à l'autre pour impliquer la production de signaux suffisamment différents de manière à obtenir une analyse robuste de leur variation, comme cela sera expliqué plus en détail par la suite. De manière privilégiée, les au moins deux valeurs des paramètres par ensemble de stimulation sont choisies de manière à obtenir une répartition à sensiblement régulière des signaux, avec une excursion maximale inscrite dans la dynamique électrique de sortie. Par exemple, lorsque le nombre de stimulations d'un ensemble particulier est égal à deux, les deux valeurs du paramètre caractérisant cet ensemble sont choisies pour obtenir un écart maximal entre les signaux résultants, tout en s'assurant que les signaux soient dans la dynamique de lecture. Lorsque le nombre de stimulations d'un ensemble de stimulations, et donc le nombre de valeurs différentes du paramètre caractérisant cet ensemble, est égal à trois, ces trois valeurs sont choisies de manière à obtenir un écart identique, ou approximativement identique, entre les signaux résultants et un écart maximal entre le plus petit signal et le plus grand signal, en s'assurant que les signaux soient dans la dynamique de lecture.

Les paramètres de stimulation consistent notamment pour le détecteur des figures 1 et 2 en :

- ▪ les valeurs des tensions de commande *GAC* et *GCM* des transistors de polarisation **18, 26** réglant la tension à l'une des bornes des bolomètres de détection **16** et de compensation **24** ; et/ou
- ▪ les valeurs des tensions *VDET* et *VSK* réglant la tension à l'autre borne des bolomètres de détection **16** et de compensation **24** ;
- ▪ la durée d'intégration *Tint* de la différence entre les courants circulant dans les bolomètres de détection **16** et les courants circulant dans les bolomètres de compensation **24** par les intégrateurs **28 ;** et/ou
- ▪ la fréquence de lecture des lignes de la matrice **12**, c'est-à-dire la fréquence trame.

Parallèlement, différents paramètres opératoires utiles à la mise en oeuvre du test d'opérabilité selon l'invention sont également stockés dans la mémoire **60**, notamment des paramètres utilisés pour un test de déclenchement de mise à jour de la table d'opérabilité, des paramètres utilisés pour l'algorithme de détection, etc...

Une fois le détecteur mis en service, en **104**, un processus de mise à jour de la table d'opérabilité *Top* est alors déclenché. Plus particulièrement, le procédé comporte un test **106** pour décider si des conditions de mise à jour de ladite table sont satisfaites avant la mise en oeuvre du bloc de détection **70.** Par exemple, une mise à jour est mise en oeuvre régulièrement, notamment à chaque mise sous tension du détecteur, périodiquement, ou à la demande de l'utilisateur. En outre, comme cela est connu en soi, la correction « 1 point » ou « 2 points » requiert usuellement également une mise à jour d'une ou plusieurs tables d'offsets, cette mise à jour comportant l'acquisition d'une scène uniforme. Le procédé de mise à jour de la table d'opérabilité *Top* utilisant également une telle acquisition, comme cela sera décrit ci-après, la mise à jour de la table d'opérabilité *Top* est avantageusement mise en oeuvre conjointement avec la mise à jour des tables de la correction « 1 point » ou « 2 points » mise en oeuvre par le détecteur, afin que les scènes uniformes acquises puissent être partagées par les deux processus de mise à jour.

Si une condition de mise à jour est satisfaite, le procédé se poursuit alors, en **108**, par la formation d'une scène sensiblement uniforme pour la matrice **12** de bolomètres de détection **16**. Par exemple, lorsque le détecteur **10** est équipé d'un obturateur mécanique, placé entre l'optique et le plan focal de celle-ci dans lequel est agencée la matrice **12**, cet obturateur est piloté par le bloc de détection **70** qui commande sa fermeture. La scène uniforme est ainsi constituée de la face de l'obturateur en regard de la matrice **12**. En variante, notamment lorsque le détecteur est dépourvu d'obturateur, l'optique du détecteur peut être défocalisée et/ou l'utilisateur place le détecteur devant une scène uniforme, par exemple un fond gris thermiquement uniforme, ou une scène naturellement très faiblement contrastée, comme par exemple un ciel pur ou au contraire très nuageux.

Une fois la matrice **12** de bolomètres **16** soumise à la scène sensiblement uniforme, le procédé se poursuit par l'application du ou des ensemble(s) de stimulations à la matrice **12** selon les paramètres de stimulation mémorisés dans la zone **74**, et au moins une image brute de la scène uniforme est acquise pour chaque stimulation appliquée. Notamment, en **110**, un ensemble de stimulations est sélectionné et une stimulation dans cet ensemble, définie par un jeu de paramètres mémorisé, est sélectionnée dans la mémoire **74**. Toujours en **110,** le jeu de paramètres sélectionné est éventuellement modifié comme décrit ci-après, et la stimulation correspondant au jeu de paramètres, le cas échéant modifié, est appliquée. En **112**, la matrice **12** est lue afin d'acquérir au moins une image brute pour la stimulation appliquée. Un test est ensuite mis en oeuvre en **120** pour savoir si tous les jeux de paramètres pour tous les ensembles ont été appliqués. Si tel n'est pas le cas, le procédé reboucle alors sur l'étape **108** pour la sélection d'un nouveau jeu de paramètres, et l'application correspondante d'une nouvelle stimulation à la matrice **12**.

Le nombre de stimulations différentes appliquées à la matrice **12** dépend du type d'analyse mise en oeuvre sur les signaux résultants. Avantageusement, pour chaque ensemble de stimulation, trois stimulations différentes faisant intervenir la variation d'un seul et même paramètre de stimulation sont appliquées à la matrice **12** afin de mettre en oeuvre ultérieurement une interpolation polynomiale du second ordre, comme cela sera décrit plus en détail ci-après.

Notamment, lors de l'étape **110**, le bloc de détection **70** commande, en **114**, la stimulation de la matrice **12** en appliquant le jeu de paramètres sélectionnés, et au moins une image brute correspondante de la scène uniforme est acquise et mémorisée dans la zone **78** de la mémoire **58**.

Le bloc de détection **70** met alors en oeuvre, en **116**, une analyse de la ou des images brutes acquises pour connaître l'état statistique de saturation des signaux bruts constitutifs de ces images. Une stimulation inadéquate de la matrice **12** peut en effet entraîner la saturation d'un nombre non négligeable des signaux si cette stimulation n'est pas adaptée aux conditions environnementales courantes devant la scène uniforme, sans que cette saturation ne soit imputable à un défaut des chaînes de formation de signal. Par exemple, la tension de polarisation appliquée pourrait faire saturer le signal si la scène uniforme présente une température trop élevée par rapport à la température des bolomètres. Notamment, le bloc de détection **70** teste, en **116**, si les signaux saturés dans l'image brute venant d'être acquise sont attribuables à leur positionnement dans la statistique naturelle de la matrice, plutôt qu'à une chaine en défaut. Avantageusement, une analyse de l'histogramme des valeurs brutes est réalisée pour savoir si l'image acquise est sous-exposée ou surexposée, et par conséquent pour savoir si le nombre de valeurs brutes saturées est imputable pour l'essentiel, non pas à des chaines défectueuses, mais une stimulation appliquée qui ne permet pas une exposition correcte de l'image résultante.

Si le résultat du test en **116** est négatif, c'est-à-dire que l'image brute acquise n'est pas satisfaisante en raison du jeu de paramètres appliqué, le bloc **70** met alors en oeuvre, en **118**, une modification du jeu de paramètres sélectionné, de manière à diminuer le nombre de signaux saturés, et le procédé reboucle sur l'étape **114** de test pour appliquer le jeu de paramètre modifié et pour savoir si ce jeu modifié atteint bien atteint cet objectif.

Avantageusement, le bloc **70** modifie la stimulation initiale, c'est-à-dire la valeur initiale du paramètre caractérisant de l'ensemble sélectionné en cours de test, pour obtenir un centrage de la moyenne des signaux de sortie dans la dynamique électrique de sortie. Par exemple, le bloc **70** ajuste ledit paramètre de manière à ce que chacun des signaux $NC(i,j)$ de sortie compris dans l'intervalle $[M - s.SD, M + s.SD]$ soit distant d'une marge prédéterminée, par exemple 0,2V, des limites haute $NCmax$ et basse $NCmin$ de saturation. Dans cette relation, $M$ et $SD$ sont respectivement la moyenne et l'écart type des signaux de sortie, et $s$ est un nombre réel positif, par exemple égal à 3, Par exemple, la tension de polarisation et/ou la durée d'intégration peuvent être ajustées pour éloigner les signaux des limites haute et basse de la dynamique.

Notamment, pour chaque paramètre $P$ de stimulation, on connaît la monotonie du signal de sortie en fonction de ce paramètre. Ainsi, la détection d'une saturation pour une valeur de paramètre donnée selon le test d'appartenance à l'intervalle $[M - s.SD, M + s.SD]$ permet de modifier cette dernière valeur de manière à retrouver un point de repos fonctionnel au sens recherché. Cette modification peut être mise en oeuvre par des méthodes connues. Par exemple, le paramètre $P$ utilisé pour le test peut être remplacé par la valeur $P+/-p$, où le signe dépendant de la monotonie du signal en fonction du paramètre et du type de saturation (haute ou basse) constatée, et $p$ est un incrément analogique, ou « pas », prédéterminé. Le nouveau paramètre est alors appliqué et le signal résultant analysé. Si la population $NC(i,j)$ résultante n'est toujours pas acceptable, l'incrémentation est reconduite jusqu'à trouver un point de fonctionnement acceptable. Un processus d'incrémentation, ou de décrémentation, logarithmique est également applicable pour limiter la durée de convergence.

Si le résultat du test **116** est positif, c'est-à-dire que la valeur du paramètre en cours d'application, le cas échéant modifiée, est jugé satisfaisante du point de vue de la saturation statistique des signaux, le procédé se poursuit par la mémorisation de la ou des images brutes correspondantes en **112**.

Une fois jugé, en **120**, que l'ensemble des stimulations nécessaires à la mise en oeuvre du diagnostic a été appliqué, et les images brutes correspondantes sont mémorisées, le procédé se poursuit en **122** par la remise en marche normale du détecteur, l'obturateur s'il y en a un, étant ouvert, et reboucle sur l'étape de test **106** pour décider si les conditions de mise à jour de la table d'opérabilité *Top* **80** sont à nouveau remplies.

Parallèlement, ou consécutivement, le procédé se poursuit, en **124**, par la mise en oeuvre, par le bloc **78**, d'un algorithme de détection des chaines de formation de signal défectueuses en fonction des stimulations appliquées pour le test d'opérabilité et des images correspondantes mémorisées, et par la mise à jour, en **126**, de la table d'opérabilité *Top* **80**.

En se référant à l'organigramme de la figure 5, l'étape **124** comporte, pour chaque stimulation appliquée, une première étape **128** de formation d'une moyenne des images mémorisées correspondantes à cette stimulation. L'étape **128** est optionnelle et mise en oeuvre si plusieurs images ont été acquises pour chaque stimulation. Acquérir plusieurs images et former leur moyenne permet de s'affranchir des fluctuations du signal liées au bruit intrinsèque aux différentes chaînes et ainsi d'affiner pour chaque chaine la valeur du coefficient de polynôme que l'on en extrait.

Dans une étape **130,** une interpolation polynomiale est alors mise en oeuvre pour chaque ensemble de stimulations et pour chaque chaine $C(i,j)$, de manière avantageuse uniquement chaque chaîne non répertoriée comme défectueuse dans la table d'opérabilité *Top*. Plus particulièrement, pour un ensemble de stimulations et pour une chaîne $C(i,j)$, le bloc **70** calcule et mémorise dans la zone tampon **58** des coefficients d'un polynôme d'ordre inférieur ou égal à $N$-1, et de préférence égal à $N$, où $N$ est le nombre de stimulations de l'ensemble appliquées pour le test d'opérabilité, et interpolant les valeurs des signaux $NC(i,j)$, associés à la chaîne $C(i,j)$ et mémorisés dans les images acquises correspondantes, en fonction des valeurs du paramètre variable de l'ensemble, c'est-à-dire un polynôme satisfaisant la relation suivante :

$$\begin{pmatrix} NC(i,j)(1) \\ NC(i,j)(2) \\ NC(i,j)(3) \\ \vdots \\ NC(i,j)(k) \\ \vdots \\ NC(i,j)(N) \end{pmatrix} = \begin{pmatrix} 1 & p(1) & p(1)^2 & \cdots & p(1)^m & \cdots & p(1)^{N-1} \\ 1 & p(2) & p(2)^2 & \cdots & p(2)^m & \cdots & p(2)^{N-1} \\ 1 & p(3) & p(3)^2 & \cdots & p(3)^m & \cdots & p(3)^{N-1} \\ \vdots & \vdots & \vdots & \vdots & \vdots & \vdots & \vdots \\ 1 & p(k) & p(k)^2 & \cdots & p(k)^m & \cdots & p(k)^{N-1} \\ \vdots & \vdots & \vdots & \vdots & \vdots & \vdots & \vdots \\ 1 & p(N) & p(N)^2 & \cdots & p(N)^m & \cdots & p(N)^{N-1} \end{pmatrix} \begin{pmatrix} \alpha_0(i,j) \\ \alpha_1(i,j) \\ \alpha_2(i,j) \\ \vdots \\ \alpha_m(i,j) \\ \vdots \\ \alpha_{N-1}(i,j) \end{pmatrix} \quad (1)$$

expression dans laquelle :

- $NC(i,j)(k)$, $k \in [1, N]$ est le signal brut $NC(i,j)$ associé à la $k$ième stimulation appliquée et mémorisé dans une image brute correspondante $NC(k)$ ;
- $p(k)$, $k \in [1, N]$ est la valeur du paramètre variable de la $k$ième stimulation appliquée ; et
- $\alpha_m(i,j)$, $m \in [0, N-1]$ est le coefficient d'ordre $m$ du polynôme d'interpolation calculé pour la chaine de formation de signal $C(i,j)$.

De manière avantageuse, le polynôme est d'ordre inférieur ou égal à $N$-1 = 2, les inventeurs ayant en effet observé que ce polynôme d'ordre peu élevé est suffisant pour obtenir un test d'opérabilité de grande fiabilité qui identifie avec une erreur typiquement inférieure à 0,5% les chaines de formation de signal défectueuses.

Selon cette variante avantageuse, trois stimulations sont par exemple appliquées par ensemble afin d'obtenir une interpolation d'ordre 2, la relation 1 se réduisant alors à la relation suivante :

$$NC(i,j)(1) = \alpha_0(i,j) + \alpha_1(i,j) \times p(1) + \alpha_2(i,j) \times p(1)^2$$
$$NC(i,j)(2) = \alpha_0(i,j) + \alpha_1(i,j) \times p(2) + \alpha_2(i,j) \times p(2)^2 \quad (2)$$
$$NC(i,j)(3) = \alpha_0(i,j) + \alpha_1(i,j) \times p(3) + \alpha_2(i,j) \times p(3)^2$$

Dans le cas d'une interpolation d'ordre 1, deux stimulations sont appliquées, la relation (2) se réduisant à deux équations faisant intervenir uniquement les coefficients $\alpha_0(i, j)$ et $\alpha_1(i, j)$.

Le calcul des coefficients du polynôme est réalisé de manière connue en soi.

Dans une étape **132** suivante, le bloc **70** met en oeuvre une analyse spatiale des coefficients calculés pour chaque chaîne $C(i,j)$ et pour chaque ensemble de stimulations afin de mettre en évidence les chaines de formation de signal produisant un signal déviant des signaux produits par les chaînes voisines. Plus particulièrement, pour chaque bolomètre $(i,j)$ de détection de la chaîne $C(i,j)$, le bloc **70** définit tout d'abord une zone $V(i,j)$ de la matrice **12** comprenant le bolomètre $(i,j)$ et des bolomètres de détection voisins de celui-ci n'appartenant pas à des chaînes répertoriées comme défectueuses dans la table d'opérabilité $Top$, par exemple une fenêtre rectangulaire comprenant les bolomètres des chaines non défectueuses de coordonnées $(u,v) \in [i$-$u_1, i$+$u_2] \times [j$-$v_1, j$+$v_2]$, où $u_1, u_2, v_1, v_2$ sont des entiers positifs, par exemple $u_1 = u_2 = 4$ et $v_1 = v_2 = 3$.

Le bloc **70** calcule ainsi une moyenne $Moy(i,j)$ et un écart type $Sig(i,j)$ des coefficients $\alpha_m(i, j)$ de la chaîne $C(i,j)$ sur le voisinage $V(i,j)$ selon les relations :

$$Moy(i,j) = \frac{1}{Card(V(i,j))} \times \sum_{(u,v) \in V(i,j)} \sum \begin{pmatrix} \alpha_0(u,v) \\ \alpha_1(u,v) \\ \alpha_2(u,v) \\ \vdots \\ \alpha_m(u,v) \\ \vdots \\ \alpha_{N-1}(u,v) \end{pmatrix} \quad (3)$$

$$Sig(i,j) = \sqrt{\frac{1}{Card(V(i,j))} \times \sum_{(u,v) \in V(i,j)} \sum \left( \begin{pmatrix} \alpha_0(u,v) \\ \alpha_1(u,v) \\ \alpha_2(u,v) \\ \vdots \\ \alpha_m(u,v) \\ \vdots \\ \alpha_{N-1}(u,v) \end{pmatrix} - Moy(i,j) \right)^2} \quad (4)$$

où *Card(V(i,j))* est le nombre de bolomètres dans la zone *V(i,j)*. Par exemple *Card(V(i,j))=(u$_1$ + u$_2$)×(v$_1$ + v$_2$)* lorsqu'aucun bolomètre de détection de la fenêtre [*i - u$_1$, i + u$_2$*]×[*j - v$_1$, j + v$_2$*] n'appartient à une chaine de formation de signal répertoriée comme défectueuse dans la table d'opérabilité *Top*.

Dans une étape **134** suivante, le bloc **70** calcule pour chaque chaîne *C(i,j)* non répertoriée comme défectueuse dans la table d'opérabilité *Top* et pour chaque ensemble de stimulation, des marges de conformité supérieure *MC$_{sup}$(i,j)* et inférieure *MC$_{inf}$(i,j)* selon les relations :

$$MC_{sup}(i,j) = Moy(i,j) + S \times Sig(i,j) \quad (5)$$

$$MC_{inf}(i,j) = Moy(i,j) - S \times Sig(i,j) \quad (6)$$

où S est un nombre positif prédéterminé.

Le bloc **70** teste alors, en **136**, pour chaque chaîne *C(i,j)* non répertoriée comme défectueuse dans la table d'opérabilité *Top* et pour chaque ensemble de jeux de paramètres de polarisation, si les coefficients du polynôme interpolé de la chaîne *C(i,j)* sont oui ou non compris dans les marges de conformité *MC$_{sup}$(i,j) et MC$_{in}$(i,j)*, c'est-à-dire si oui ou non la relation suivante est vérifiée :

$$MC_{inf}(i,j) \leq \begin{pmatrix} \alpha_0(i,j) \\ \alpha_1(i,j) \\ \alpha_2(i,j) \\ \vdots \\ \alpha_m(i,j) \\ \vdots \\ \alpha_{N-1}(i,j) \end{pmatrix} \leq MC_{sup}(i,j) \quad (7)$$

Si tel est le cas pour au moins un ensemble de stimulations, la chaîne *C(i,j)* est alors référencée comme défectueuse dans la table d'opérabilité *Top* qui est mise à jour en conséquence dans l'étape **126**.

La scène observée lors du test d'opérabilité étant uniforme, on constate ainsi que le coefficient d'ordre zéro $\alpha_0(i, j)$ correspond à l'offset du signal *NC(i,j)* produit par la chaîne *C(i,j)*, et que les coefficients d'ordre $m$ $\alpha_m(i, j)$ correspondent respectivement aux dérivées partielles et locales de l'offset par rapport au paramètre de stimulation d'ordre m du signal *NC(i,j)*. Ces coefficients représentent ainsi différents niveaux de sensibilité mesurant la déviance d'une chaîne par rapport à ses voisines. Il a notamment été observé par les inventeurs que les contrastes qui apparaissent sur les images corrigées lorsque les conditions opératoires du détecteur varient, dépendent de variations spatiales de ces coefficients. Ces derniers signent donc de manière pertinente l'état conforme ou défectueux des chaînes de formation de signal.

De manière avantageuse, l'étape **136** reboucle sur l'étape **132** pour une nouvelle mise en oeuvre de l'analyse spatiale du calcul des marges de conformité et de l'analyse de conformité des chaînes par rapport auxdites marges. Une chaîne jugée défectueuse peut en effet mettre en défaut l'algorithme de détection, notamment en surestimant la valeur de l'écart type *Sig(i,j)* en prenant en compte les chaînes défectueuses dans le calcul de cette valeur. L'algorithme de détection stoppe par exemple au bout de deux mises en oeuvre consécutives des étapes **132-136** ou lorsqu'il n'y a plus aucune chaîne détectée comme défectueuse.

En variante, le calcul de la moyenne *Moy(i,j)* et de l'écart type *Sig(i,j)* est réalisé sur la zone *V(i,j)* en ne tenant pas compte des coefficients polynomiaux de la chaîne *C(i,j)*.

Il a été décrit un mode de réalisation dans lequel les stimulations sont ajustées pour minimiser le nombre de signaux saturés et/ou la dispersion de la population de signaux. En variante, les stimulations ne sont pas ajustées, mais directement appliqués sans modification.

Il a été décrit un mode de réalisation dans lequel plusieurs ensembles de stimulations sont appliqués, ce qui permet d'augmenter la robustesse de la détection, ou diagnostic, des chaînes défectueuses. En variante, un seul ensemble de stimulation est utilisé. On observe que la détection reste robuste, tout en accélérant l'acquisition des images pour le test d'opérabilité, et donc en minimisant le temps d'inactivation du détecteur.

Il a été décrit un mode de réalisation dans lequel plusieurs images sont acquises pour chaque stimulation appliquée, ce qui permet d'obtenir une image moyenne essentiellement exempte de bruit. En variante, une estimation du bruit temporel est mise en oeuvre en calculant l'écart type de chaque signal *NC(i,j)* des images par rapport à la moyenne de celui-ci, ce qui permet de déterminer un comportement défectueux en termes de bruit lorsque le signal *NC(i,j)* s'écarte de sa moyenne de plus d'une marge déterminée en fonction de l'écart type.

En variante, ou de manière supplémentaire, une seule image est acquise pour chaque stimulation, et le test d'opérabilité est mis en oeuvre plusieurs fois afin de déterminer plusieurs valeurs pour les coefficients du ou des polynômes d'interpolation. Disposant de différentes valeurs de ces coefficients pour plusieurs instants, il est ainsi possible de déterminer si les valeurs de ceux-ci sont bruitées et déterminer qu'une chaîne de formation de signal présente un défaut en termes de bruit.

Il a été décrit un mode de réalisation dans lesquelles les chaînes de formation des signaux bruts sont diagnostiquées. En variante, s'il est souhaité tester les chaines de formation des signaux corrigés, le bloc **70** est connecté au bloc de correction des signaux **64** pour recevoir les signaux corrigés et mémoriser ceux-ci dans la zone **78**, les étapes du procédé étant par ailleurs identiques à celles décrites précédemment.

**Revendications**

1. Procédé de diagnostic de l'état défectueux de chaines de formation de signal d'un détecteur bolométrique (10) comportant une matrice (12) de bolomètres de détection (16) suspendus au-dessus d'un substrat, chaque chaine comportant un bolomètre (16) de ladite matrice (12), un circuit de stimulation électrique (18) de ladite chaine, et un circuit (22, 28) de formation d'un signal en fonction de ladite stimulation appliquée à ladite chaîne par le circuit de stimulation (18), ledit procédé consistant :

    a. à former (en 108) l'image d'une scène sensiblement uniforme sur la matrice (12) de bolomètres (16);
    b. à appliquer (en 110) au moins une première et une seconde stimulations différentes aux chaines ;
    c. à lire (en 112) les signaux formés par les chaînes correspondant aux stimulations appliquées ; et
    d. pour chaque chaîne d'un ensemble prédéterminé de chaines à diagnostiquer :

        ▪ à définir (en 132) un voisinage constitué de chaînes dont les bolomètres de détection (16) sont voisins du bolomètre de détection de ladite chaîne ;
        ▪ à calculer (en 130) des coefficients d'un polynôme interpolant les valeurs des signaux formés par ladite chaîne en fonction des au moins une première et seconde stimulations appliquées;
        ▪ à calculer (en 130), pour chaque chaîne du voisinage de ladite chaîne, des coefficients d'un polynôme interpolant les valeurs des signaux formés par ladite chaîne du voisinage en fonction des au moins une et seconde stimulations appliquées ;

- à calculer (en 132) une moyenne et un écart type desdits coefficients calculés des chaînes du voisinage ou de l'ensemble formé des chaînes du voisinage et de ladite chaîne ; et

- à diagnostiquer (en 136) que ladite chaine est défectueuse si la valeur desdits coefficients de celle-ci est à l'extérieur de marges définies en fonction de la moyenne et de l'écart type calculés.

**2.** Procédé selon la revendication 1, dans lequel la stimulation des chaines est réalisée ligne par ligne de la matrice de bolomètres selon une fréquence trame, et dans lequel les au moins première et seconde stimulations diffèrent uniquement par la fréquence trame appliquée.

**3.** Procédé selon la revendication 1 ou 2, dans lequel la stimulation des chaines comporte l'application d'une tension de polarisation aux bolomètres, et dans lequel les au moins une première et seconde stimulations diffèrent uniquement par la tension de polarisation appliquée.

**4.** Procédé selon la revendication 1, 2 ou 3, dans lequel la stimulation des chaines comporte l'application d'un courant de polarisation aux bolomètres, et dans lequel les au moins une première et seconde stimulations diffèrent uniquement par le courant de polarisation appliqué.

**5.** Procédé selon l'une quelconque des revendications précédentes, dans lequel la stimulation des chaines comporte l'application d'une tension et/ou d'un courant de polarisation aux bolomètres pendant une durée de polarisation, et les aux moins une première et seconde stimulations diffèrent uniquement par la durée de polarisation appliquée.

**6.** Procédé selon l'une quelconque des revendications précédentes, dans lequel les étapes a), b), c) et d) sont exécutées plusieurs fois, dans lequel chaque chaîne de formation du signal diagnostiquée comme défectueuse est répertoriée dans un ensemble de chaînes défectueuses, et dans lequel le voisinage d'une chaîne à diagnostiquer comporte les chaînes :

- dont les bolomètres appartiennent à une fenêtre de bolomètres centrée sur le bolomètre de la chaine à diagnostiquer ; et
- qui n'appartiennent pas à l'ensemble de chaînes défectueuses.

**7.** Procédé selon l'une quelconque des revendications précédentes, dans lequel la moyenne et l'écart type sont calculés à partir des coefficients polynomiaux extraits de la chaîne à diagnostiquer et des coefficients polynomiaux extraits des chaînes du voisinage de celle-ci, et dans lequel, si la chaîne est diagnostiquée comme étant défectueuse, une confirmation ou une infirmation du diagnostic est réalisée :

- en calculant une moyenne et un écart type des coefficients des polynômes d'interpolation uniquement des chaînes du voisinage de ladite chaine ; et
- en confirmant le diagnostic si la valeur des coefficients du polynôme d'interpolation de celle-ci est à l'extérieur de marges définies en fonction de la moyenne et de l'écart type calculés en fonction uniquement du voisinage, et en infirmer le diagnostic dans le cas contraire.

**Patentansprüche**

**1.** Verfahren zur Diagnose des fehlerhaften Zustands von Signalgenerierungsketten eines bolometrischen Detektors (10) mit einer Matrix (12) aus Erfassungsbolometern (16), die über einem Substrat aufgehängt sind, wobei jede Kette ein Bolometer (16) der Matrix (12), eine Schaltung (18) zur elektrischen Stimulation der Kette und eine Schaltung (22, 28) zum Generieren eines Signals in Abhängigkeit von der durch die Stimulationsschaltung (18) an die Kette angelegten Stimulation umfasst, wobei das Verfahren darin besteht:

a. die Abbildung einer im Wesentlichen gleichmäßigen Szene auf der Matrix (12) aus Bolometern (16) herzustellen (in 108);

b. mindestens eine erste und eine zweite unterschiedliche Stimulation an die Ketten anzulegen (in 110);

c. die durch die Ketten generierten Signale, die den angelegten Stimulationen entsprechen, zu lesen (in 112); und

d. für jede Kette einer vorbestimmten Einheit von zu diagnostizierenden Ketten:

- eine Nachbarschaft zu definieren (in 132), die aus Ketten besteht, deren Erfassungsbolometer (16) dem Erfassungsbolometer der Kette benachbart sind;
- Koeffizienten eines Polynoms zu berechnen (in 130), das die Werte der Signale interpoliert, die durch die Kette in Abhängigkeit von der angelegten mindestens einen ersten und zweiten Stimulation generiert wurden;
- für jede Kette der Nachbarschaft der Kette Koeffizienten eines Polynoms zu berechnen (in 130), das die Werte der Signale interpoliert, die durch die Kette der Nachbarschaft in Abhängigkeit von der angelegten mindestens einen ersten und zweiten Stimulation generiert wurden;
- einen Mittelwert und einen Abweichungstyp der berechneten Koeffizienten der Ketten der Nachbarschaft oder der aus den Ketten der Nachbarschaft und der Kette bestehenden Einheit zu berechnen (in 132); und
- (in 136) zu diagnostizieren, dass die Kette fehlerhaft ist, wenn der Wert von deren Koeffizienten außerhalb von Spannen liegt, die in Abhängigkeit vom berechneten Mittelwert und Abweichungstyp definiert sind.

2. Verfahren nach Anspruch 1, wobei die Stimulation der Ketten Zeile für Zeile der Matrix aus Bolometern nach einer Bildfrequenz erfolgt, und wobei sich die mindestens eine erste und zweite Stimulation einzig durch die angelegte Bildfrequenz unterscheiden.

3. Verfahren nach Anspruch 1 oder 2, wobei die Stimulation der Ketten das Anlegen einer Vorspannung an die Bolometer umfasst, und wobei sich die mindestens eine erste und zweite Stimulation einzig durch die angelegte Vorspannung unterscheiden.

4. Verfahren nach Anspruch 1, 2 oder 3, wobei die Stimulation der Ketten das Anlegen eines Polarisationsstroms an die Bolometer umfasst, und wobei sich die mindestens eine erste und zweite Stimulation einzig durch den angelegten Polarisationsstrom unterscheiden.

5. Verfahren nach einem der vorhergehenden Ansprüche, wobei die Stimulation der Ketten das Anlegen einer Vorspannung und/oder eines Polarisationsstroms an die Bolometer während einer Polarisationsdauer umfasst, und wobei sich die mindestens eine erste und zweite Stimulation einzig durch die angewendete Polarisationsdauer unterscheiden.

6. Verfahren nach einem der vorhergehenden Ansprüche, wobei die Schritte a), b), c) und d) mehrmals ausgeführt werden, wobei jede als fehlerhaft diagnostizierte Generierungskette des Signals in einer Einheit fehlerhafter Ketten erfasst wird, und wobei die Nachbarschaft einer zu diagnostizierenden Kette die Ketten umfasst:

- deren Bolometer zu einem Bolometerfenster gehören, das auf das Bolometer der zu diagnostizierenden Kette zentriert ist; und
- die nicht zu der Einheit fehlerhafter Ketten gehören.

7. Verfahren nach einem der vorhergehenden Ansprüche, wobei der Mittelwert und der Abweichungstyp aus den von der zu diagnostizierende Kette extrahierten Polynomkoeffizienten und den extrahierten Polynomkoeffizienten von den Ketten der Nachbarschaft von dieser berechnet werden, und wobei, wenn die Kette als fehlerhaft diagnostiziert ist, eine Bestätigung oder Entkräftung der Diagnose erfolgt:

- indem ein Mittelwert und ein Abweichungstyp der Koeffizienten der Interpolationspolynome einzig von den Ketten der Nachbarschaft der Kette berechnet werden; und
- indem die Diagnose bestätigt wird, wenn der Wert von deren Koeffizienten des Interpolationspolynoms außerhalb von Spannen liegt, die in Abhängigkeit vom Mittelwert und Abweichungstyp definiert sind, die einzig in Abhängigkeit von der Nachbarschaft berechnet sind, und indem die Diagnose im gegenteiligen Fall entkräftet wird.

## Claims

1. A method of diagnosing the defective state of signal-forming chains of a bolometric detector (10), comprising a array (12) of detection bolometers (16) suspended above a substrate, each chain comprising a bolometer (16) of said array (12), a circuit of electric stimulation (18) of said chain, and a circuit (22, 28) for forming a signal according to the stimulation applied to said chain by the stimulation circuit (18), said method comprising:

a. forming (108) the image of a substantially uniform scene on the array (12) of bolometers (16);

b. applying (110) at least a different first and second stimulations to the chains;

c. reading (112) the signals formed by the chains corresponding to the applied stimulations; and

d. for each chain of a predetermined set of chains to be diagnosed:

- defining (132) a neighborhood formed of chains having detection bolometers (16) which are neighbors to the detection bolometer of said chain;
- calculating (130) coefficients of a polynomial interpolating the values of the signals formed by said chain according to said at least one first and second applied stimulations;
- calculating (130), for each chain of the neighborhood of said chain, coefficients of a polynomial interpolating the values of the signals formed by said neighborhood chain according to the at least one first and second applied stimulations;
- calculating (132) an average and a standard deviation of said calculated coefficients of the neighborhood chains or of the set formed of the neighborhood chains and of said chain; and
- diagnosing (136) that said chain is defective if the value of said coefficients thereof is outside of margins defined according to the calculated average and standard deviation.

2. The method of claim 1, wherein the chain stimulation is performed row by row of the bolometer array according to a frame frequency, and wherein the at least one first and second stimulations only differ by the applied frame frequency.

3. The method of claim 1 or 2, wherein the chain stimulation comprises applying a bias voltage to the bolometers, and wherein the at least one first and second stimulations only differ by the applied bias voltage.

4. The method of claim 1, 2, or 3, wherein the chain stimulation comprises applying a bias current to the bolometers, and wherein the at least one first and second stimulations only differ by the applied bias current.

5. The method of any of the forgoing claims, wherein the chain stimulation comprises applying a bias voltage and/or current to the bolometers for a biasing duration, and the at least one first and second stimulations only differ by the applied biasing duration.

6. The method of any of the foregoing claims, wherein steps a), b), c), and d) are carried out a plurality of times, wherein each signal-forming chain diagnosed as defective is listed in a set of defective chains, and wherein the neighborhood of a chain to be diagnosed comprises chains:

- having their bolometers belonging to a bolometer window centered on the bolometer of the chain to be diagnosed; and
- which do not belong to the set of defective chains.

7. The method of any of the foregoing claims, wherein the average and the standard deviation are calculated from the polynomial coefficients extracted from the chain to be diagnosed and the polynomial coefficients extracted from the chains of the neighborhood thereof and wherein, if the chain is diagnosed as defective, the diagnosis is validated or invalidated:

- by calculating an average and a standard deviation of the interpolation polynomial coefficients only of the chains of the neighborhood of said chain; and
- by confirming the diagnosis if the value of the coefficients of the interpolation polynomial thereof is outside of margins defined according to the average and to the standard deviation calculated according to the neighborhood only, and by otherwise invalidating the diagnosis.

PIXEL DE COMPENSATION

VSK

22

24

GCM

26

A

PIXEL DE DETECTION

A

SELECT — 20

GAC — 18

IR

16

VDET

10

14

12

SORTIE VIDEO

42

CTIA

RESET

34

32

A

VOUT

VBUS

30

28

14

22

28

36

38

**Fig. 1**

(Etat de la technique)

40

EP 2 833 622 B1

**Fig. 2**

(Etat de la technique)

**Fig. 3**

-100-

-102-

-104-

- -106- +

-108- 110

-114-

-118- + -116- -

-112-

- -120- +

Fig. 4

-122-

-124-

-126-

124

-128-

-130-

-132-

-134-

-136-

Fig. 5

**RÉFÉRENCES CITÉES DANS LA DESCRIPTION**

**Documents brevets cités dans la description**

- US 5047861 A
- US 20050157942 A
- WO 0171299 A
- US 20050029453 A
- US 20030160171 A

**Littérature non-brevet citée dans la description**

- **E. MOTTIN et al.** Uncooled amorphous silicon enhancement for 25$\mu$m pixel pitch achievement. *Infrared Technology and Application XXVIII, SPIE,* vol. 4820E